# EUROPEAN PATENT SPECIFICATION

(11) **EP 1 620 996 B1**
(45) Date of publication and mention of the grant of the patent: **19.08.2009**
(21) Application number: 04752109.1
(22) Date of filing: 07.05.2004
(51) Int. Cl.: H04L 29/06, H04L 12/24

(54) **Communication path analysis**
Kommunikationsweganalyse
Analyse de chemin de communication

(30) Priority: 07.05.2003 US 431193
(43) Date of publication of application: 01.02.2006
(73) Proprietor: HEWLETT-PACKARD DEVELOPMENT COMPANY, L.P., Houston, TX 77070 (US)
(72) Inventor: PACHL, Jan, Toronto, Ontario M4K 2B3 (CA)
(74) Representative: Franks, Adam Peter
(86) International application number: PCT/US2004/015005
(87) International publication number: WO 2004/102924

(56) References cited:
- EP-A- 1 119 151
- GUPTA P ET AL: "PACKET CLASSIFICATION ON MULTIPLE FIELDS" COMPUTER COMMUNICATION REVIEW, ASSOCIATION FOR COMPUTING MACHINERY. NEW YORK, US, vol. 29, no. 4, October 1999 (1999-10), pages 147-160, XP000852195 ISSN: 0146-4833
- HINRICHS S: "Policy-based management: bridging the gap" COMPUTER SECURITY APPLICATIONS CONFERENCE, 1999. (ACSAC '99). PROCEEDINGS. 15TH ANNUAL PHOENIX, AZ, USA 6-10 DEC. 1999, LOS ALAMITOS, CA, USA,IEEE COMPUT. SOC, US, 6 December 1999 (1999-12-06), pages 209-218, XP010368586 ISBN: 0-7695-0346-2
- LAKSHMAN T V ET AL: "HIGH-SPEED POLICY-BASED PACKET FORWARDING USING EFFICIENT MULTI-DIMENSIONAL RANGE MATCHING" COMPUTER COMMUNICATION REVIEW, ASSOCIATION FOR COMPUTING MACHINERY. NEW YORK, US, vol. 28, no. 4, October 1998 (1998-10), pages 203-214, XP000914436 ISSN: 0146-4833
- MIEI T ET AL: "Parallelization of IP-packet filter rules" INT. CONF. ON ALGORITHMS & ARCHITECTURES FOR PARALLEL PROCESSING, XX, XX, 1997, pages 381-388, XP002150561
- MAYER A ET AL: "Fang: a firewall analysis engine" SECURITY AND PRIVACY, 2000. S&P 2000. PROCEEDINGS. 2000 IEEE SYMPOSIUM ON BERKELEY, CA, USA 14-17 MAY 2000, LOS ALAMITOS, CA, USA,IEEE COMPUT. SOC, US, 14 May 2000 (2000-05-14), pages 177-187, XP010501134 ISBN: 0-7695-0665-8

## Description

### TECHNICAL FIELD

This description relates to analyzing communication paths in communication networks.

### BACKGROUND

Firewalls typically contain a set of rules that specify how communications are to be treated. For example, a communication may be analyzed based on its destination address, source address, service type, and/or communication time to determine whether to accept, reject, or drop the communication. These rules are typically designed to implement security policies for an organization. Thus, an organization may desire certain communications and not desire other communications.

When a firewall contains only a few rules, a simple visual inspection will answer questions regarding appropriate and communication. However, when a firewall contains numerous rules , sometimes over a hundred, reviewing the rules by hand may be time-consuming and error prone.

Hinrichs, S., "Policy-based management: bridging the gap", Computer Security Applications Conference 6-10 Dec, 1999, 6 December 1999, pp. 209-218, discloses a system for mapping a user-specified policy to per-device configuration. A policy is a guarded action; when the condition is matched, the action constraint is enforced. Most commonly, the condition tests against a property of the packet header, e.g. the source IP address or the destination port. Once an administrator specifies policy goals, the enforcing devices must be configured to enforce these policy goals consistently. Traditionally, the administrator or some other technically knowledgeable person has been responsible for creating the device configurations. However, with information about the network topology, this kind of mapping from global intent to local mechanism is well suited to translation automation. It is disclosed that a policy compiler takes topology information and global policy objects and generates a per-device policy list in a canonical form. When calculating the per-device configurations, the policy compiler can also optimise the search structure. It is disclosed that most enforcing devices only take a list of policy rules as input, but that if a device can understand nested conditionals, the policy compiler can use d-dimensional trees to optimise the runtime packet search structure.

Gupta, P. et al., "Packet Classification Multiple Fields", Computer Communication Review, 29 (4), October 1999, pp. 147-160, discloses packet classification performed using a packet classifier, also called a policy database, flow classifier or simply a classifier. A classifier is a collection of rules or policies. Each rule specifies a class that a packet may belong to, based on some criterion on F fields of the packet header, and associates with each class an identifier. This identifier uniquely specifies the action associated with the rule. When two rules are not mutually exclusive, the order in which they appear in the classifier will determine their relative priority. Two distinct rules *R* and *S*, with *R* appearing first in the classifier are said to be adjacent in dimension 'i' if all of the following three conditions hold: (1) They have the same action, (2) All but the i^{th} field have the exact same specification in the two rules, and (3) All rules appearing in between *R* and *S* in the classifier have either the same action or are disjoint from *R*. Having determined that two rules *R* and *S* are adjacent, they are merged to form a new rule *T* with the same action as *R* (or *S*). It has the same specifications as that of *R* (or *S*) for all the fields except that of the *i*^{th}, which is simply the logical-OR of the *i*^{th} field specifications of *R* and *S*.

### SUMMARY

Techniques are provided for communication path analysis. In one general aspect, communication path analysis involves a method according to claim 1. These operations may be performed by a communication rule analyzer including an extraction tool and a database, by an article including a machine-readable medium storing instructions operable to cause one or more machines to perform the operations, or by another appropriate system. Path attribute types may include destination address, source address, service type, and communication time.

Particular implementations may include determining whether a database query has been received and, if a query has been received, search ing the database to determine whether any communication path rules satisfy the query. The query criteria may include destination address, source address, service type, and communication time. Particular implementations also may include retrieving a first communication path rule for a second access control device and inserting the rule into the database.

In certain implementations, retrieving a communication path rule includes parsing the rule from a firewall configuration file. Additionally, inserting the first rule into a database may include placing the at least one attribute and the at least one operation into a relational database having separate tables for the path attribute type and the path operation type. Furthermore, determining whether an attribute of the second rule corresponds to an attribute of the first rule for at least one path attribute type may include performing a set difference operation between attributes of the second rule and attributes of the first rule for the at least one path attribute type, and inserting the attribute of the second rule that does not correspond to an attribute of the first rule into the database may include inserting the results of the difference operation into the database. Also, inserting the attribute of the second rule that does not correspond to an attribute of the first rule into the database may include attempting to group at least one type of non-corresponding attributes of the second rule into ranges. Additionally, determining whether an attribute of the second rule corresponds to an attribute of the first rule for at least one path attribute type may be performed only for a set of operations.

In another general aspect, a system for communication path analysis as defined in claim 12 and an article according to claim 21 are provided.

The details of one or more implementations of the invention are set forth in the accompanying drawings and the description below. Other features will be apparent from the description and drawings, and from the claims.

### DESCRIPTION OF DRAWINGS

FIG. 1 is a block diagram illustrating a system for communication path analysis.
FIG 2 illustrates a set of communication path rules.
FIG 3 is a block diagram illustrating a communication rule analyzer.
FIG 4 is a flow chart illustrating a process for communication path analysis.
FIGS. 5A-C illustrate a set of tables for communication path analysis.

Like reference symbols in the various drawings indicate like elements.

### DETAILED DESCRIPTION

Communication path analysis includes determining whether a communication may travel through a firewall. This is useful for understanding the paths, if any, that desired communications may take and for testing whether undesired communications are blocked. Communication path analysis also includes determining whether a communication may pass through any type of access control device and/or along a path.

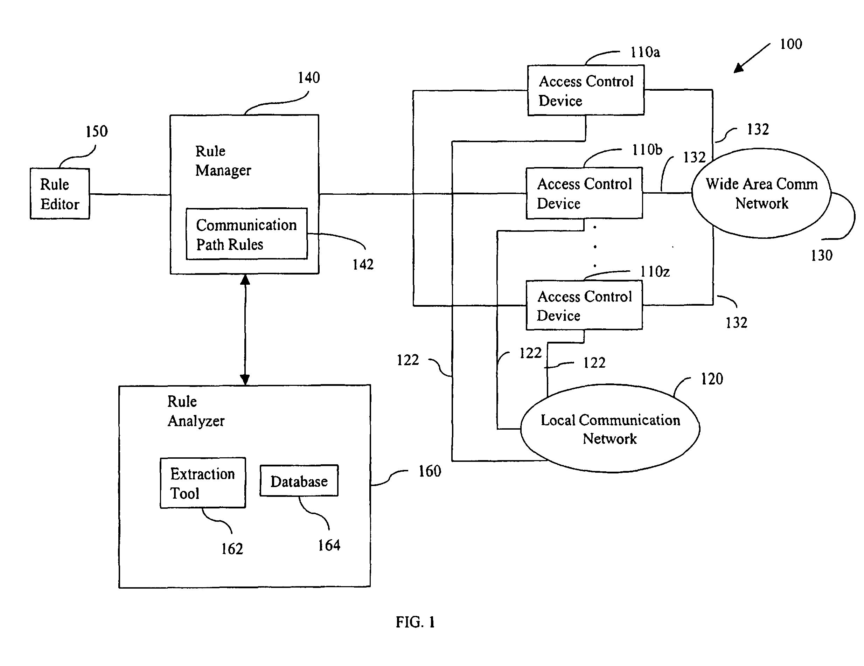

FIG. 1 illustrates a system 100 for communication path analysis. In general, system 100 includes access control devices 110, a local communication network 120, a wide area communication network 130, a rule manager 140, a rule editor 150, and a rule analyzer 160. When local communication network 120 and wide area communication network 130 want to exchange communications with each other, access control devices 110 are responsible for determining whether the communications are allowed. To accomplish this, access control devices 110 consult rules from rule manager 140, which is responsible for storing and maintaining the communication path rules for access control devices 110. Rule editor 150, in turn, is responsible for creating and modifying rules for rule manager 140, and rule analyzer 160 is responsible for analyzing the rules in rule manager 140.

A communication may be a communication session, a message, or a portion of a message, such as, for example, a packet. A communication may contain text, audio, graphics, video, statistics, measurements, and/or any other appropriate information, and may be in any appropriate communication format, such as, for example, Ethernet, Internet protocol (IP), X.25, Asynchronous Transfer Mode (ATM), or frame relay.

In more detail, access control devices 110 include communication interface devices for receiving communications from and sending communications to local communication network 120 and wide area communication network 130, processing devices for analyzing the communications, and memory for storing the communications. For example, access control devices 110 may include Ethernet cards for sending communications to and receiving communications from local communication network 120 and wide area network 130. For a processing device, access control devices 110 may include a digital processor, an analog processor, a biological processor, an atomic processor, and/or any other type of device for manipulating information in a logical manner. The memory may include random access memory (RAM), read-only memory (ROM), compact-disk read-only memory (CD-ROM), registers, and/or any other appropriate volatile or non-volatile information storage device. The memory may also store other information and/or instructions for access control devices 110.

Access control devices 110 may be firewalls, screening routers, or any other type of devices that evaluate communications based on rules. In particular implementations, access control devices 110 are Check Point^{™} firewalls. System 100 may contain any number of access control devices 110.

Access control devices 110 are coupled to local communication network 120 and wide area communication network 130 by links 122 and links 132, respectively. Links 122 and links 132 may be metallic wire, such as for example, twisted pair wire or coaxial cable, fiber-optic cable, radio frequency (RF) wireless channels, infrared (IR) wireless channels, or any other appropriate type of wireline or wireless path for transferring information.

Local communication network 120 and wide area communication network 130 may be any appropriate type of communication network. For example, network 120 may be an IEEE 802.3 network, an IEEE 802.5 network, an IEEE 802.11 network, or any other type of local area network (LAN), and network 130 may be an X.25 network, a frame relay network, an ATM network, the Public Switched Telephone Network (PSTN), or any other type of packet-switched or circuit-switched, whether wireline or wireless, communication network. Note that local communication network 120 and wide area communication network 130 may also convey communications between any of a variety of other communication devices, such as, for example, personal computers, servers, and/or telephones.

As mentioned previously, rule manager 140 is responsible for storing and maintaining communication path rules 142. Rules 142 describe how communications that arrive at access control devices 110, whether traveling from local communication network 120 to wide area communication network 130 or from wide area communication network 130 to local communication network 120, are to be handled. A communication may be evaluated based on any of a variety of attributes, such as, for example, source address, destination address, service type, and/or communication time, to determine whether to allow the communication to pass. Rules 142 may be stored in configuration files for access control devices 110, and may be sent to the devices when they start and/or as they operate, although the format used by an access control device may be quite different from that at the rule manager.

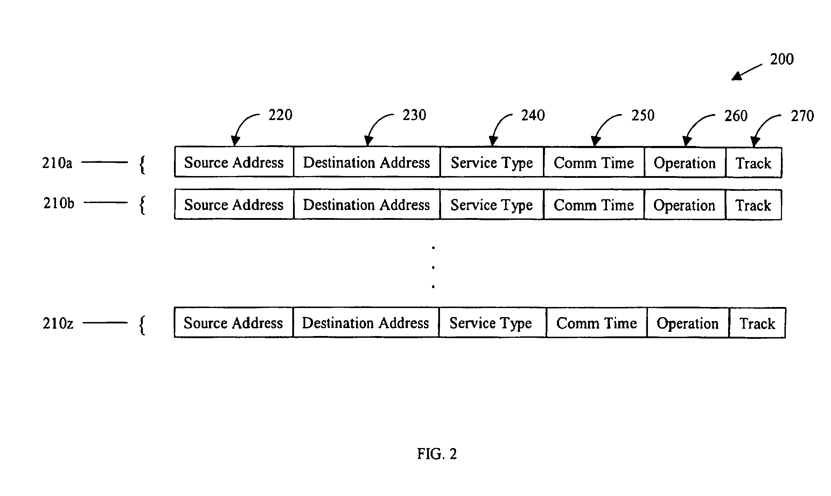

FIG. 2 illustrates a set of communication path rules 200. These rules are representative of those for Check Point^{™} firewalls. Rules for other access control devices may be similar or quite different.

As illustrated, each of rules 200 is contained in a record 210, and each of records 210 includes a source address field 220, a destination address field 230, a service type field 240, a communication time field 250, an operation field 260, and a track field 270. Source address field 220 contains addresses of the communication origination devices for which a rule applies. Destination address field 230, in turn, contains addresses of the communication destination devices for which a rule applies. Both types of addresses may be specified individually and/or in ranges. Service type field 240 contains an identifier for the type of communication service, such as, for example, File Transfer Protocol (FTP), HyperText Transfer Protocol (HTTP), User Datagram Protocol (UDP), or Transmission Control Protocol (TCP), for which a rule applies. The type of service may be specified by a port number, a service type, or otherwise, and more than one service may be specified. Communication time field 250 contains the time of day for which a rule applies. Operation field 260 specifies an identifier for an operation to be performed on the communications that are subject to the rule. For example, a communication may be accepted, rejected (with a negative response to the source), or dropped (with no response to the sourcc). Track field 270 contains an identifier specifying whether the communication attempt is recorded in a log and what information is included in the log.

Using rules 200, access control devices 110 control arriving communications. For example, an arriving communication may be examined based on any combination of the four attributes , source address, destination address, service type, and communication time , to determine which rule applies. If a match is found, operation field 260 and track field 270 determine the operations to be performed to or because of the communication. In typical firewalls, for instance, a communication is sequentially compared against rules until a match is found, but if no match is found, the communication is dropped.

Rules for other access control devices may contain a different arrangement of fields or grouping of information. Furthermore, rules may include object definitions or groupings that are used throughout the rule base. Additionally, other rules may include different types of information. For example, a path attribute type may be anything that describes, at least in part, a path through a communication network, and a path operation type may be anything that is done to or because of a communication. The content and grammar of such rules, however, are understood by those skilled in the art.

Rule manager 140 may also include communication interface devices for receiving and sending communications to access control devices 110, a processing device for analyzing the communications, and memory for storing the communications. Rules 142 may also be stored in the memory. Rule manager 140 may be a server, a personal computer, a workstation, or any other appropriate type of device.

Rule editor 150 enables a user to create and/or modify rules 142 in rule manager 140. Rule editor 150 may include a communication interface device for receiving communications from and sending communications to rule manager 140, a processing device for analyzing the communications, and memory for storing the communications. The processing device also may generate a user interface for presenting the rules to a user and for allowing their editing. Rule editor 150 may additionally include a display device for presenting the rules to a user.

Rule analyzer 160 includes an extraction tool 162 and a database 164. Extraction tool 162 is operable to process rules 142 for insertion into database 164. The core logic of the extraction tool may be the same for all rule formats, while the front end of the extraction tool may be tailored to the specific rule format. Once in database 164, queries may be used to analyze the rules. Database 164 may be flat, hierarchical, relational, or of any other appropriate format, and may contain logic for organizing and searching the rules.

To process access rules 142, extraction tool 162 first retrieves the rules. The rules may be retrieved by requesting them from rule manager 140, by reading them from a peripheral device, such as, for example, a disk drive, by reading them from main memory, or by any other appropriate technique.

When the extraction tool has at least two rules, the extraction tool determines whether a path attribute type of one rule has attributes that correspond to a path attribute type of another rule. The attribute type may be defined in the tool before the extraction begins. Attributes may correspond, for example, if they match. Corresponding attributes regularly occur in firewall rules because a firewall processes its rules in a sequential order; thus, a later rule may have attributes that match an earlier rule, but that will never be applied because the earlier rule is always used. The attributes that correspond are removed from one rule, and the rules are inserted into database 164.

The rule from which the attributes are removed is typically a rule of lower priority. Such a determination may be made, for example, by examining the order in which an access control device processes rules, by examining a preference indicator for the rule, or by any other appropriate technique.

In particular implementations, determining and removing corresponding attributes between rules may be accomplished by using a set difference operation. In such an operation, the difference, which may be multi-dimensional, between sets of data is determined.

Table 1 illustrates the set difference operation for a two-dimensional set of data , source and destination addresses. Note that the set difference is not just the subtraction of each attribute set relative to the corresponding attribute set, but the difference across the sets. Thus, of the one-hundred address combinations for the second rule, only the corresponding address combination of the first rule is removed.

**Table 1**

| | Source_Addr | Dest_Addr |
|---|---|---|
| Rule # 2 | 1-10 | 1-10 |
| Rule # 1 | 1 | 2 |
| Set Difference | 2-10 | 1-10 |
| | 1 | 1, 3-10 |

Once the rules have been inserted into database 164, queries may be performed to analyze the rules. Such queries may be performed using standard query language, such as, for example, Structured Query Language (SQL), or proprietary languages. The queries may be designed to discover any relation between the data in the database. For example, a query may ask whether there is a rule that allows a specific type of communication from one communication device to another device. Furthermore, the query may ask for what services the communication is available.

Rule analyzer 160 may include a processing device for processing the rules and memory for storing the rules. The memory also may store extraction tool 162 and database 164. Rule analyzer 160 may additionally include a communication interface device for receiving and sending communications to rule manager 140. The communications may contain rules 142.

System 100 has a variety of features. For example, by allowing a user to query the rules of an access control device, a user may gain an understanding of the rules for the access control device. This may help the user in validating the rule base against its stated objectives, comparing the rule base against a standard baseline, and/or analyzing proposed changes before they are applied to the rule base. This analysis of access control device policies may be important in identifying and removing security vulnerabilities. Furthermore, since almost any question that may be formulated as a database query may be answered, this system provides flexibility in use, as it does not need to be tied to any specific queries. Additionally, by automating the process, rule analysis may be performed quicker and more accurately. Moreover, because the analysis may be automated, labor costs to perform such analyses may be reduced, leading to a higher probability that the analysis will be performed. Furthermore, because the rules are placed into a database, reports may be readily generated. Also, the analysis may be performed statically, in that the rule base may be analyzed without executing the rule base.

Although FIG. 1 illustrates a system for communication path analysis, other implementations may include less, more, and/or a different arrangement of components. For example, extraction tool 162 and database 164 may be a part of rule manager 140 or rule editor 150. Thus, a separate apparatus for rule analysis may not be required. Furthermore, rule editor 150 may be part of rule manger 140. In addition, rule manager 140 may be coupled to access control devices 110 by local communication network 120. Moreover, rule manger 140, rule editor 150, rule analyzer 160, and/or access control devices 110 may be coupled by local communication network 120. Furthermore, rule analyzer 160 may not be coupled to rule manager 140.

As another example, the communication networks may be any type of communication networks, whether local or non-local. Additionally, local communication network 120 may in fact be three local communication networks, or any other type of communication network, with each one coupled to one of access control devices 110, and/or wide area network 130 may in fact be three wide area communication networks, or any other type of communication network, with each one coupled to one of access control devices 110. In general, therefore, any type, number, and/or arrangement of networks may be coupled to access control devices 110.

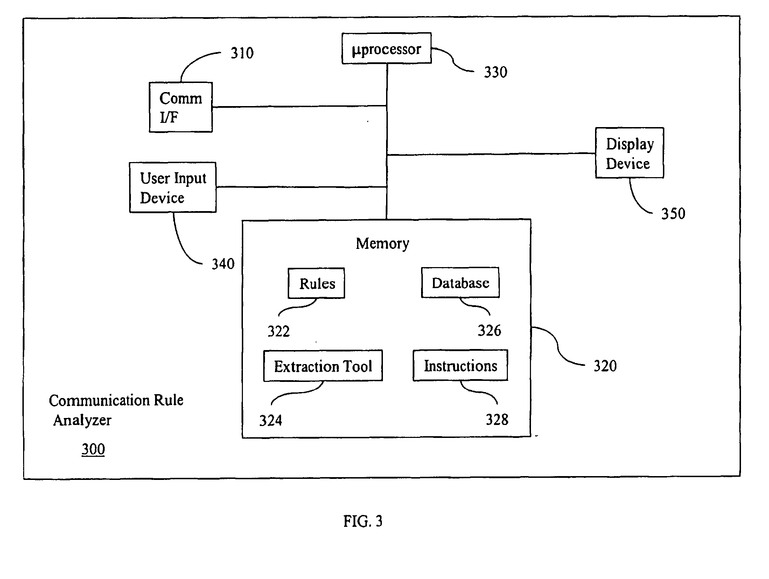

FIG. 3 illustrates a communication rule analyzer 300 that is similar to rule analyzer 160 in FIG. 1. As illustrated, rule analyzer 300 includes a communication interface 310, memory 320, a microprocessor 330, a user input device 340, and a display device 350. Memory 320 may include RAM, ROM, CD-ROM, registers, and or any other type of volatile or non-volatile information storage device. Memory 320 stores rules 322 received from a rule manager, an extraction tool 324, a database 326, and instructions 328, which are responsible for the lower-level operations of rule analyzer 300. Communication interface 310 may be a network interface card, a modem, a transceiver, or any other appropriate device for sending communications to and receiving communications from a rule manager. The rules may be received in these communications. Microprocessor 330 may be a complex instruction set computer (CISC), a reduced instruction set computer (RISC), or any other appropriate device for manipulating information in a logical manner. Microprocessor operates according to the instructions in extraction tool 324, database 326, and instructions 328. User input device 340 may include a mouse, a trackball, a keyboard, a light pen, a stylus, and/or any other appropriate device for detecting input from a user. Microprocessor 330 responds to signaling from user input device 340. Display device 350 may be a cathode ray tube (CRT) display, a liquid crystal display (LCD), a projector, or any other appropriate device for visually presenting information, and is responsible for displaying a user interface to present rules 322, the data in database 326, and/or the results of queries of database 326.

In operation, rule analyzer 300 retrieves rules for analysis. The analyzer then compares the rules against each other to remove, for at least one path attribute type, communication path attribute redundancies between higher priority rules and lower priority rules. The analyzer populates the database with the retained attributes for each rule, along with the associated communication path operations. After this, the analyzer is ready to receive and execute queries against the database. The analyzer also generates graphical user interfaces for displaying the database, queries, and results of queries.

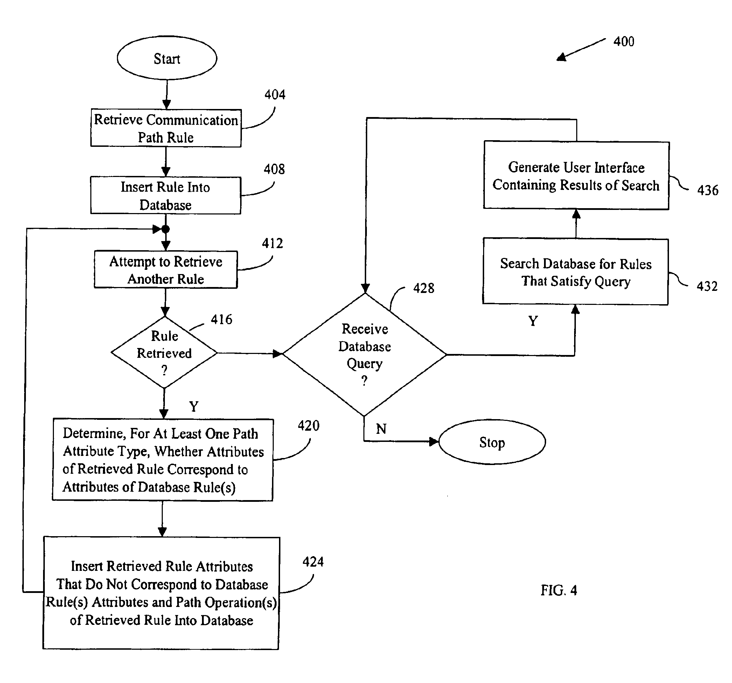

FIG. 4 is a flow chart illustrating a process 400 for communication path analysis that may be performed, for example, by rule analyzer 160 of FIG. 1. The process begins with the rule analyzer retrieving a communication path rule (step 404). The rule may be in the format of that used for a Check Point™ firewall and may be retrieved by parsing an ASCII configuration file, for example. After retrieving the communication path rule, the rule analyzer inserts the rule into a database (step 408). The database may be a relational database that contains a table for the attribute portion and a table for the operation portion of the rule. By inserting the rule into a database, the rule may be analyzed as part of a database query.

The policy analyzer then attempts to retrieve another communication path rule (step 412). After this, the analyzer determines whether a rule was retrieved (step 416). If another rule was retrieved, the analyzer determines, for at least one path attribute type, whether attributes of the retrieved rule correspond to attributes of the rule in the database (step 420) and inserts the retrieved rule attributes that do not correspond to the database rule attributes, along with any communication path operations of the retrieved rule, into the database (step 424). Determining whether attributes of the retrieved rule correspond to attributes of the database rule may be performed by using a set difference operation between path attribute types of the retrieved rule and the database rule; the results of this operation may then be inserted into the database, along with any communication path operations for the retrieved rule. The analyzer then attempts to retrieve another communication path rule (step 412).

If it is determined that no more communication path rules are present, the rule analyzer determines whether it has received a request to query the database (step 428). Such a request may be in the form of a structured query language (SQL), for example. If such a request has been received, the policy analyzer searches the database for rules that satisfy the query criteria (step 432). After this, the policy analyzer generates a user interface containing the results of the search (step 436). The user interface may then be displayed. Once no more requests to query the database have been received, the process ends.

Although FIG. 4 illustrates one implementation of a process for communication path analysis, other implementations may include fewer, more, and/or a different arrangement of operations. For example, all of the communication path rules may be retrieved at once, allowing for the elimination of steps 412-416. Furthermore, determining whether attributes of rules correspond may be performed before inserting any of the rules into the database, allowing for step 408 and step 424 to be performed contemporaneously. As a further example, the database query operations , steps 428-436 , may be performed at a time that is disjoint from the database populating operations , steps 404-424. Thus, the database may be populated at one point in time and interrogated at other points in time. Furthermore, the database populating operations may be a separate process from the database query operations. As a further example, rules from different access control devices may be inserted into the database. The rules for each access control device may be separated by appropriate identifiers in the database.

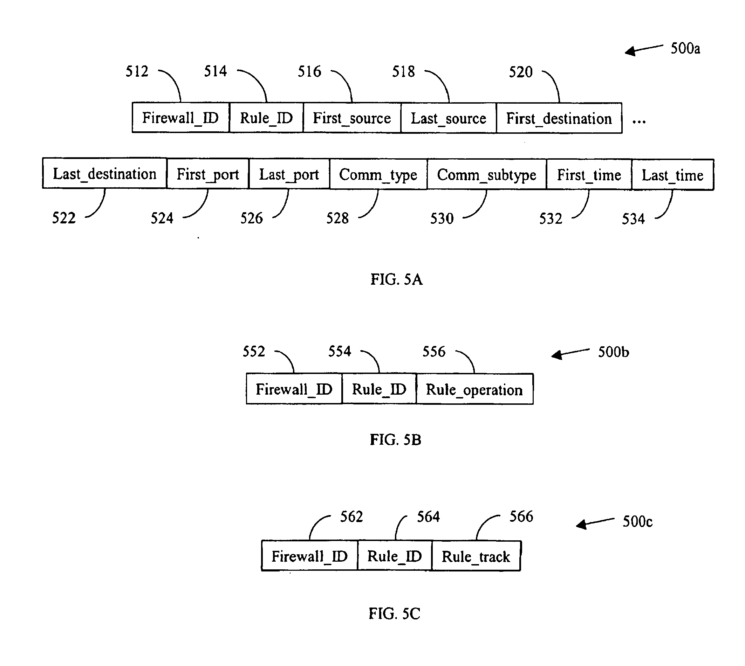

FIGS. 5A-C illustrate a set of tables 500 for communication path analysis. In general, tables 500 are configured for communication path attributes and/or communication path operations for rules of a Check Point™ FireWall-1, Release 3.0, although not all attributes and operations are illustrated here. Similar tables, however, may be used for other access control devices.

FIG. 5A illustrates a table 500a that contains attributes for rules. The table may have a descriptive title such as "Attributes." Each row of table 500a contains a firewall identifier field 512, a rule identifier field 514, a first source address field 516, a last source address field 518, a first destination address field 520, a last destination address field 522, a first port field 524, a last port field 526, a communication type field 528, a communication subtype field 530, a first communication time field 532, and a last communication time field 534.

Firewall identifier field 512 contains an identifier for the firewall with which a row is associated, and rule identifier field 514 contains an identifier for the rule with which the row is associated. In general, an identifier may be an address, a serial number, a flag, or any other appropriate descriptor of an apparatus or function.

First source address field 516 and last source address field 518 contain the first address and the last address, respectively, of a contiguous range of addresses in the source address field of the rule with which the row is associated. Thus, table 500a may have more than one row per rule, because a rule may correspond to multiple contiguous ranges of addresses, with each range corresponding to a row.

First destination address field 520 and last destination address field 522 contain the first address and the last address, respectively, of a contiguous range of addresses in the destination address field of the rule with which the row is associated. Thus, table 500a may have more than one row per rule, because a rule may correspond to multiple contiguous ranges of addresses, with each range corresponding to a row.

First port field 524 and last port field 526 contain an identifier for a first port and a last port, respectively, of a contiguous range of ports in the service type field of the rule with which the row is associated. Thus, table 500a may have more than one row per rule.

Communication type field 528 contains an identifier for the communication service type of the ports, such as, for example, FTP, HTTP, UDP, or TCP, and communication subtype field 530 contains an identifier that further specifies the service type, such as, for example, Internet Control Message Protocol (ICMP) parameters.

First time field 532 and last time field 534 contain the first time and the last time of a contiguous range of times in the communication time field of the rule with which the row is associated. Thus, table 500a may have more than one row per rule.

FIG. 5B illustrates a table 500b that contains operations for rules. The table may have a descriptive title such as "Operations." Each row of table 500b contains a firewall identifier field 552, a rule identifier field 554, and a rule operation field 556. Firewall identifier field 552 and rule identifier field 554 contain information similar to firewall identifier field 512 and rule identifier field 514 in table 500a. Rule operation field 556 contains an identifier specifying an operation, such as, for example, accept, reject, or drop, to be performed to a communication that has the attributes associated with the rule. Thus, table 500b has one row per rule.

FIG. 5C illustrates a table 500c that contains track functions for rules. The table may have a descriptive title such as "Track." Each row of table 500c contains a firewall identifier field 562, a rule identifier field 564, and a track function field 566. Firewall identifier field 562 and rule identifier field 564 contain information similar to firewall identifier field 512 and rule identifier field 514 in table 500a. Track function field 566 contains an identifier specifying an operation to be performed because of the communication associated with the rule, recording the communication in a log, in this instance. Thus, table 500c has one row per rule.

Tables 500a-c allow the capture of the rule bases for firewalls. The information stored in the tables, however, will not necessarily match the rules in the firewalls, because of the removal of corresponding attributes between rules.

In one implementation, when the rules are processed by the extraction tool, the resulting values in the tables satisfy the following condition: for every firewall F, source IP address S, destination IP address D, port number P, communication type T, communication subtype Z, and time Y, there exists at most one rule number N such that (F, S, D, P, T, Z, Y, N) match the corresponding fields in table 500a. (Note that X matches first_X and last_X if first_X ≤ X ≤ last_X.) To satisfy this condition, the extraction tool may proceed through the rules in the rule base in sequential order and, for each rule: 1) convert the rule into the corresponding relation, represented by one or more rows in table 500a, one row in table 500b, and one row in table 500c; and 2) then subtract, using the set difference operation, from that relation all relations already constructed for the rules with smaller rule numbers. The remaining source addresses, destination addresses, service types, and communication times may be stored in the database, along with the associated operations. Of course, this may be done after, before, or while inserting the rules into the database.

The set difference operation may increase the number of rows that represent the relation in the tables. In the worst case, the number or rows increase exponentially with the number of rules. But for rule bases occurring in practice, the increase will be much smaller, and probably well within the capabilities of modern databases.

As illustrated, space in tables 500 may be conserved by using ranges for the addresses, service types, and communication times remaining after the set difference operation. Using ranges may entail first attempting to determine whether ranges exist for a data type. Determining whether ranges exist for a data type may be accomplished, for example, by examining the remaining data to determine whether any items are contiguous to each other. The first attribute and the last attribute in the contiguous range may then be used to bound the range. Using ranges with the set difference operation may assist in formulating these ranges.

Another way in which to decrease the number of rows would be to only subtract the relations that correspond to reject and drop rules. This may allow redundancies in the accept rules, but should decrease the number of rows in the tables since the number of ranges will be reduced due to fewer subtraction operations. This might be especially useful if queries will only concern whether there are paths through one or more access control devices. However, this may complicate some queries against the database for other types of information. Such an approach may be used for other access control devices and/or data removal techniques.

Based on tables 500a-c, queries may be posed to the database. For example, for a given range S of source addresses and a range D of destination addresses, does a firewall allow any communication from an address in S to an address in D ? And if so, for what service types ? To answer the question, the address ranges S and D are described as (first_S, last _S) and (first_D and last _D), respectively, and the Firewall_ID is F. The SQL query that answers the question is:
SELECT First_port, Last_port, Comm_type, Comm_subtype
FROM Attributes, Operations
WHERE Attributes.Firewall_ID = F AND Operations.Firewall_ID = F
   AND Attributes.Rule_ID = Operations.Rule_ID
   AND first_S ≤ Attributes.Last_source
   AND last_S ≥ Attributes.First_source
   AND first_D ≤ Attributes.Last_destination
   AND last_D ≥ Attributes.First_destination
   AND Operations.Rule_operation = accept.

Tables 500 are useful for systems with multiple firewalls because the tables allow the rules for multiple firewalls to be identifiably stored therein and, hence, queries to be run for each firewall. Each firewall may be processed separately and placed into the tables to form the database. Also, tables 500 allow queries to be generated for multiple firewalls at one time. For example, a user may want to know whether there is a communication path through multiple firewalls. The queries may depend on how the firewalls are interconnected and on the complexity of the network address translation (NAT) rules.

Although the discussion regarding FIG. 5 has centered on a simplified version of firewall policies, additional features, such as implicit rules, address translation, directional rules, and source ports, are readily accommodated by the proposed approach. For example, a search for loops may be performed in firewalls that perform address translation, by the use of recursive queries. Of course, in some cases, this will require additional tables in the database, but the techniques remain the same.

Additionally, although the discussion has centered around the rules for Check Point™ firewalls, the discussion is applicable to firewall rules of other vendors, although the tables may have to be modified depending of the fields used for the rules therein. Moreover, the discussion is applicable to other access control devices, again subject to modification of the tables depending on the fields used for the rules therein. The database queries follow naturally from the established tables.

A number of implementations have been described. Other implementations are within the scope of the following claims.

## Claims

1. A method for communication path analysis, the method comprising:
retrieving a first communication path rule and a second communication path rule for an access control device (110), each rule comprising at least one path attribute type specifying at least one attribute and at least one path operation type specifying at least one operation;
inserting the first rule into a database (164;326) operable to store and search communication path rules; and;
determining, for at least one path attribute type, whether an attribute of the second rule corresponds to an attribute of the first rule, **characterised by**
when the attribute of the second rule does not correspond to an attribute of the first rule, inserting the second rule into the database (164;326) with communication path attribute redundancies between the first and second rule removed for at least one attribute type, thereby inserting the attribute of the second rule that does not correspond into the database, along with the at least one operation of the second rule.

2. The method of claim 1, wherein retrieving a communication path rule comprises parsing the rule from a firewall configuration file.

3. The method of claim 1, wherein the at least one path attribute type comprises one or more of destination address, source address, service type, and communication time.

4. The method of claim 1, wherein inserting the first rule into a database (164;326) comprises placing the at least one attribute and the at least one operation into a relational database having separate tables (500a,500b) for the path attribute type and the path operation type.

5. The method of claim 1, further comprising:
determining whether a database query has been received; and
if a query has been received, searching the database (164;326) to determine whether any communication path rules satisfy the query.

6. The method of claim 5, wherein the query criteria comprise one or more of destination address, source address, service type, and communication time.

7. The method of claim 1, wherein:
determining whether an attribute of the second rule corresponds to an attribute of the first rule for at least one path attribute type comprises performing a set difference operation between attributes of the second rule and attributes of the first rule for the at least one path attribute type; and
inserting the attribute of the second rule that does not correspond to an attribute of the first rule into the database (164;326) comprises inserting the results of the set difference operation into the database.

8. The method of claim 1, wherein inserting the attribute of second rule that does not correspond to an attribute of the first rule into the database (164;326) comprises attempting to group at least one type of non-corresponding attributes of the second rule into ranges.

9. The method of claim 1, further comprising:
retrieving a first communication path rule for a second access control device (110); and
inserting the first communication path rule for the second access control device (110) into the database.

10. The method of claim 9, further comprising:
determining whether a database query has been received; and
if a query has been received, searching the database to determine whether any communication path rules satisfy the query.

11. The method of claim 1, wherein determining whether an attribute of the second rule corresponds to an attribute of the first rule for at least one path attribute type is performed only for a set of operations.

12. A system for communication path analysis, comprising:
a communication rule analyzer comprising:
a database (164;326) operable to store and search communication path rules (322), each rule comprising at least one path attribute type specifying at least one attribute and at least one path operation type specifying at least one operation; and
an extraction tool (324) operable to:
retrieve a first communication path rule and a second communication path rule for an access control device (110),
insert the first rule into the database (164;326), and
determine, for at least one path attribute type, whether an attribute of the second rule corresponds to an attribute of the first rule, **characterised in that** the system is operable to, when the attribute of the second rule does not correspond to an attribute of the first rule, insert the second rule into the database (164;326) with communication path attribute redundancies between the first and second rule removed for at least one attribute type, thereby inserting the attribute of the second rule into the database (164;326), along with the at least one operation of the second rule.

13. The system of claim 12, wherein the database (164;326) comprises a relational database having separate tables (500a,500b) for the path attribute type and the path operation type.

14. The system of claim 12, wherein the database (164;326) is further operable to:
determine whether a database query has been received; and
if a query has been received, search the database (164;326) to determine whether any communication path rules satisfy the query.

15. The system of claim 12, wherein the extraction tool (324) is operable to:
perform a set difference operation between attributes of the second rule and attributes of the first rule for the at least one path attribute type to determine whether an attribute of the second rule corresponds to an attribute of the first rule for at least one path attribute type; and
insert the results of the set difference operation into the database (164; 326) to insert the attribute of the second rule that does not correspond to an attribute of the first rule into the database (164;326).

16. The system of claim 12, wherein the extraction tool (324) is operable to attempt to group at least one type of non-corresponding attributes of the second rule into ranges to insert the attribute of the second rule that does not correspond to an attribute of the first rule into the database (164;326).

17. The system of claim 12, wherein the extraction tool (324) is further operable to:
retrieve a first communication path rule for a second access control device (110); and
insert the first communication path rule for the second access control device (110) into the database.

18. The system of claim 17, wherein the database (164;326) is further operable to:
determine whether a database query has been received; and
if a query has been received, search the database (164;326) to determine whether any communication path rules satisfy the query.

19. The system of claim 12, wherein the extraction tool (324) is operable to determine whether an attribute of the second rule corresponds to an attribute of the first rule for at least one path attribute type only for a set of operations.

20. The system of claim 17, wherein the database is operable to receive queries for communication path rules,
wherein each rule comprises at least two path attribute types specifying at least one attribute,
wherein the database comprises separate tables (500a,500b) for the path attribute types and the path operation type, and
wherein the extraction tool (324) is operable to:
perform a set difference operation between path attribute types of the second rule and the first rule, and
insert the result of the difference operation into the database (164;326), along with the at least one operation of the second rule.

21. An article comprising a machine-readable medium storing instructions operable to cause one or more machines to perform operations comprising:
retrieving a first communication path rule and a second communication path rule for an access control device (110), each rule comprising at least one path attribute type specifying at least one attribute and at least one path operation type specifying at least one operation;
inserting the first rule into a database (164;326) operable to store and search communication path rules, and;
determining, for at least one path attribute type, whether an attribute of the second rule corresponds to an attribute of the first rule **characterised in that** the operations comprise, when the attribute of the second rule does not correspond to an attribute of the first rule, inserting the second rule into the database (164;326) with communication path attribute redundancies between the first and second rule removed for at least one attribute type, thereby inserting the attribute of the second rule that does not correspond into the database, along with the at least one operation of the second rule.

22. The article of claim 21, wherein inserting the first rule into a database (164;326) comprises placing the at least one attribute and the at least one operation into a relational database having separate tables for the path attribute type and the path operation type.

23. The article of claim 21, wherein the instructions are further operable to cause one or more machines to perform operations comprising:
determining whether a database query has been received; and
if a query has been received, searching the database (164;326) to determine whether any communication path rules satisfy the query.

24. The article of claim 23, wherein the query criteria comprise destination address, source address, service type, and communication time.

25. The article of claim 21, wherein:
determining whether an attribute of the second rule corresponds to an attribute of the first rule for at least one path attribute type comprises performing a set difference operation between attributes of the second rule and attributes of the first rule for the at least one path attribute type; and
inserting the attribute of the second rule that does not correspond to an attribute of the first rule into the database (164;326) comprises inserting the results of the difference operation into the database (164;326).

26. The article of claim 21, wherein inserting the attribute of the second rule that does not correspond to an attribute of the first rule into the database (164;326) comprises attempting to group at least one type of non-corresponding attributes of the second rule into ranges.

27. The article of claim 21, wherein the instructions are further operable to cause one or more machines to perform operations comprising:
retrieving a first communication path rule for a second access control device; and
inserting the first communication path rule for the second access control device into the database (164;326).

28. The article of claim 27, wherein the instructions are further operable to cause one or more machines to perform operations comprising:
determining whether a database query has been received; and
if a query has been received, searching the database (164;326) to determine whether any communication path rules satisfy the query.

29. The article of claim 21, wherein determining whether an attribute of the second rule corresponds to an attribute of the first rule for at least one path attribute type is performed only for a set of operations.

## Patentansprüche

1. Verfahren zur Kommunikationspfadanalyse, wobei das Verfahren umfasst:
Abrufen einer ersten Kommunikationspfadregel und einer zweiten Kommunikationspfadregel für eine Zugriffssteuervorrichtung (110), wobei jede Regel zumindest einen Pfadattributtyp, welcher zumindest ein Attribut spezifiziert und zumindest einen Pfadoperationstyp umfasst, welcher zumindest eine Operation spezifiziert;
Einfügen der ersten Regel in eine Datenbank (164; 326), welche betreibbar ist, um Kommunikationspfadregeln zu speichern und zu suchen; und
Bestimmen, für zumindest einen Pfadattributtyp, ob ein Attribut der zweiten Regel einem Attribut der ersten Regel entspricht,
**dadurch gekennzeichnet, dass**
wenn das Attribut der zweiten Regel nicht einem Attribut der ersten Regel entspricht, Einfügen der zweiten Regel in die Datenbank (164; 326), wobei Kommunikationspfadattributredundanzen zwischen der ersten und zweiten Regel für zumindest einen Attributtyp entfernt werden, wodurch das Attribut der zweiten Regel, welches nicht entsprechend ist, in die Datenbank zusammen mit zumindest einer Operation der zweiten Regel eingefügt wird.

2. Verfahren gemäß Anspruch 1, wobei ein Abrufen einer Kommunikationspfadregel ein Analysieren der Regel von einer Firewallkonfigurationsdatei umfasst.

3. Verfahren gemäß Anspruch 1, wobei der zumindest eine Pfadattributtyp eine oder mehrere von einer Bestimmungsadresse, einer Quellenadresse, einem Servicetyp und einer Kommunikationszeit umfasst.

4. Verfahren gemäß Anspruch 1, wobei ein Einfügen der ersten Regel in eine Datenbank (164; 326) ein Anordnen des zumindest einen Attributs und der zumindest einen Operation in einer relationalen Datenbank umfasst, welche getrennte Tabellen (500a, 500b) für den Pfadattributtyp und den Pfadoperationstyp aufweist.

5. Verfahren gemäß Anspruch 1, weiterhin umfassend:
Bestimmen, ob eine Datenbankabfrage erhalten worden ist; und
wenn eine Abfrage erhalten worden ist, Durchsuchen der Datenbank (164; 326), um zu bestimmen, ob irgendwelche Kommunikationspfadregeln die Abfrage erfüllen.

6. Verfahren gemäß Anspruch 5, wobei die Abfragekriterien eine oder mehrere von einer Bestimmungsadresse, einer Quellenadresse, eines Servicetyps und einer Kommunikationszeit umfassen.

7. Verfahren gemäß Anspruch 1, wobei:
ein Bestimmen, ob ein Attribut der zweiten Regel einem Attribut der ersten Regel für zumindest einen Pfadattributtyp entspricht, ein Durchführen einer Satzdifferenzoperation zwischen Attributen der zweiten Regel und Attributen der ersten Regel für zumindest einen Pfadattributtyp umfasst; und
ein Einfügen des Attributs der zweiten Regel, welche nicht einem Attribut der ersten Regel entspricht, in die Datenbank (164; 326) ein Einfügen der Ergebnisse der Satzdifferenzoperation in die Datenbank umfasst.

8. Verfahren gemäß Anspruch 1, wobei ein Einfügen des Attributs der zweiten Regel, welche nicht einem Attribut der ersten Regel entspricht, in die Datenbank (164; 326) ein Versuchen umfasst, zumindest einen Typ der nicht entsprechenden Attribute der zweiten Regel in Bereichen zu gruppieren.

9. Verfahren gemäß Anspruch 1, weiterhin umfassend:
Abrufen einer ersten Kommunikationspfadregel für eine zweite Zugriffsteuervorrichtung (110); und
Einfügen der ersten Kommunikationspfadregel für die zweite Zugriffsteuervorrichtung (110) in die Datenbank.

10. Verfahren gemäß Anspruch 9, weiterhin umfassend:
Bestimmen, ob eine Datenbankabfrage erhalten worden ist; und
wenn eine Abfrage erhalten worden ist, Durchsuchen der Datenbank, um zu bestimmen, ob irgendwelche Kommunikationspfadregeln die Abfrage erfüllen.

11. Verfahren gemäß Anspruch 1, wobei ein Bestimmen, ob ein Attribut der zweiten Regel einem Attribut der ersten Regel für zumindest einen Pfadattributtyp entspricht nur für einen Satz von Operationen durchgeführt wird.

12. System für eine Kommunikationspfadanalyse, umfassend:
einen Kommunikationsregelanalysator, umfassend:
eine Datenbank (164; 326), welche betreibbar ist, um Kommunikationspfadregeln (322) zu speichern und zu suchen, wobei jede Regel zumindest einen Pfadattributtyp, welcher zumindest ein Attribut spezifiziert, und zumindest einen Pfadoperationstyp umfasst, welcher zumindest eine Operation spezifiziert; und
ein Extraktionswerkzeug (324), welches betreibbar ist, um:
eine erste Kommunikationspfadregel und eine zweite Kommunikationspfadregel für eine Zugriffsteuervorrichtung (110) abzurufen,
die erste Regel in die Datenbank (164; 326) einzufügen, und
für zumindest einen Pfadattributtyp zu bestimmen, ob ein Attribut der zweiten Regel einem Attribut der ersten Regel entspricht, **dadurch gekennzeichnet, dass** das System betreibbar ist, um, wenn das Attribut der zweiten Regel nicht einem Attribut der ersten Regel entspricht, die zweite Regel in die Datenbank (164; 326) einzufügen, wobei Kommunikationspfadattributredundanzen zwischen der ersten und zweiten Regel für zumindest einen Attributtyp entfernt werden, wodurch das Attribut der zweiten Regel in die Datenbank (164; 326) zusammen mit der zumindest einen Operation der zweiten Regel eingefügt wird.

13. System gemäß Anspruch 12, wobei die Datenbank (164; 326) eine relationale Datenbank umfasst, welche getrennte Tabellen (500a, 500b) für den Pfadattributtyp und den Pfadoperationstyp aufweist.

14. System gemäß Anspruch 12, wobei die Datenbank (164; 326) weiterhin betreibbar ist, um:
zu bestimmen, ob eine Datenbankabfrage erhalten worden ist; und
wenn eine Abfrage erhalten worden ist, die Datenbank (164; 326) zu durchsuchen, um zu bestimmen, ob irgendwelche Kommunikationspfadregeln die Abfrage erfüllen.

15. System gemäß Anspruch 12, wobei das Extraktionswerkzeug (324) betreibbar ist, um:
eine Satzdifferenzoperation zwischen Attributen der zweiten Regel und Attributen der ersten Regel für den zumindest einen Pfadattributtyp durchzuführen, und, um zu bestimmen, ob ein Attribut der zweiten Regel einem Attribut der ersten Regel für zumindest einen Pfadattributtyp entspricht; und
die Ergebnisse der Satzdifferenzoperation in die Datenbank (164; 326) einzufügen, um das Attribut der zweiten Regel, welches nicht einem Attribut der ersten Regel entspricht, in die Datenbank (164; 326) einzufügen.

16. System gemäß Anspruch 12, wobei das Extraktionswerkzeug (324) betreibbar ist, um zu versuchen, zumindest einen Typ von nicht entsprechenden Attributen der zweiten Regel in Bereiche zu gruppieren, um das Attribut der zweiten Regel, welches nicht einem Attribut der ersten Regel entspricht, in die Datenbank (164; 326) einzufügen.

17. System gemäß Anspruch 12, wobei das Extraktionswerkzeug (324) weiterhin betreibbar ist, um:
eine erste Kommunikationspfadregel für eine zweite Zugriffsteuervorrichtung (110) abzurufen; und
um die erste Kommunikationspfadregel für die zweite Zugriffsteuervorrichtung (110) in die Datenbank einzufügen.

18. System gemäß Anspruch 17, wobei die Datenbank (164; 326) weiterhin betreibbar ist, um:
zu bestimmen, ob eine Datenbankabfrage erhalten worden ist; und
wenn eine Abfrage erhalten worden ist, die Datenbank (164; 326) zu durchsuchen, um zu bestimmen, ob irgendwelche Kommunikationspfadregeln die Abfrage erfüllen.

19. System gemäß Anspruch 12, wobei das Extraktionswerkzeug (324) betreibbar ist, um zu bestimmen, ob ein Attribut der zweiten Regel einem Attribut der ersten Regel für zumindest einen Pfadattributtyp nur für einen Satz von Operationen entspricht.

20. System gemäß Anspruch 17, wobei die Datenbank betreibbar ist, um Abfragen für Kommunikationspfadregeln zu erhalten,
wobei jede Regel zumindest zwei Pfadattributtypen umfasst, welche zumindest ein Attribut spezifizieren,
wobei die Datenbank getrennte Tabellen (500a, 500b) für die Pfadattributtypen und die Pfadoperationstypen umfasst, und
wobei das Extraktionswerkzeug (324) betreibbar ist, um:
eine Satzdifferenzoperation zwischen Pfadattributtypen der zweiten Regel und der ersten Regel durchzuführen, und
das Ergebnis der Differenzoperation in die Datenbank (164; 326) zusammen mit der zumindest einen Operation der zweiten Regel einzufügen.

21. Gegenstand, welcher ein maschinenlesbares Medium umfasst, welches Instruktionen speichert, welche wirken um eine oder mehrere Maschinen zu veranlassen, Operationen durchzuführen, welche umfassen:
Abrufen einer ersten Kommunikationspfadregel und einer zweiten Kommunikationspfadregel für eine Zugriffssteuervorrichtung (110), wobei jede Regel zumindest einen Pfadattributtyp, welcher zumindest ein Attribut spezifiziert und zumindest einen Pfadoperationstyp umfasst, welcher zumindest eine Operation spezifiziert;
Einfügen der ersten Regel in eine Datenbank (164; 326), welche betreibbar ist, um Kommunikationspfadregeln zu speichern und zu suchen; und
Bestimmen, für zumindest einen Pfadattributtyp, ob ein Attribut der zweiten Regel einem Attribut der ersten Regel entspricht,
**dadurch gekennzeichnet, dass**
wenn das Attribut der zweiten Regel nicht einem Attribut der ersten Regel entspricht, Einfügen der zweiten Regel in die Datenbank (164; 326), wobei Kommunikationspfadattributredundanzen zwischen der ersten und zweiten Regel für zumindest einen Attributtyp entfernt werden, wodurch das Attribut der zweiten Regel, welches nicht entsprechend ist, in die Datenbank zusammen mit zumindest einer Operation der zweiten Regel eingefügt wird.

22. Gegenstand gemäß Anspruch 21, wobei das Einfügen der ersten Regel in eine Datenbank (164; 326) ein Anordnen des zumindest einen Attributs und der zumindest einen Operation in einer relationalen Datenbank umfasst, welche getrennte Tabellen für den Pfadattributtyp und den Pfadoperationstyp aufweist.

23. Gegenstand gemäß Anspruch 21, wobei die Instruktionen weiterhin wirken, um eine oder mehrere Maschinen zu veranlassen, Operationen durchzuführen, welche umfassen:
Bestimmen, ob eine Datenbankabfrage erhalten worden ist; und
wenn eine Abfrage erhalten worden ist, Durchsuchen der Datenbank (164; 326), um zu bestimmen, ob irgendwelche Kommunikationspfadregeln die Abfrage erfüllen.

24. Gegenstand gemäß Anspruch 23, wobei die Abfragekriterien eine oder mehrere von einer Bestimmungsadresse, einer Quellenadresse, eines Servicetyps und einer Kommunikationszeit umfassen.

25. Gegenstand gemäß Anspruch 21, wobei:
ein Bestimmen, ob ein Attribut der zweiten Regel einem Attribut der ersten Regel für zumindest einen Pfadattributtyp entspricht, ein Durchführen einer Satzdifferenzoperation zwischen Attributen der zweiten Regel und Attributen der ersten Regel für zumindest einen Pfadattributtyp umfasst; und
ein Einfiigen des Attributs der zweiten Regel, welche nicht einem Attribut der ersten Regel entspricht, in die Datenbank (164; 326) ein Einfügen der Ergebnisse der Differenzoperation in die Datenbank (164; 326) umfasst.

26. Gegenstand gemäß Anspruch 21, wobei ein Einfügen des Attributs der zweiten Regel, welche nicht einem Attribut der ersten Regel entspricht, in die Datenbank (164; 326) ein Versuchen umfasst, zumindest einen Typ der nicht entsprechenden Attribute der zweiten Regel in Bereiche zu gruppieren.

27. Gegenstand gemäß Anspruch 21, wobei die Instruktionen weiterhin wirken, um eine oder mehrere Maschinen zu veranlassen, Operationen durchzuführen, welche umfassen:
Abrufen einer ersten Kommunikationspfadregel für eine zweite Zugriffsteuervorrichtung; und
Einfügen der ersten Kommunikationspfadregel für die zweite Zugriffsteuervorrichtung in die Datenbank (164; 326).

28. Gegenstand gemäß Anspruch 27, wobei die Instruktionen weiterhin wirken, um eine oder mehrere Maschinen zu veranlassen, Operationen durchzuführen, welche umfassen:
Bestimmen, ob eine Datenbankabfrage erhalten worden ist; und
wenn eine Abfrage erhalten worden ist, Durchsuchen der Datenbank (164; 326), um zu bestimmen, ob irgendwelche Kommunikationspfadregeln die Abfrage erfüllen.

29. Gegenstand gemäß Anspruch 21, wobei ein Bestimmen, ob ein Attribut der zweiten Regel einem Attribut der ersten Regel für zumindest einen Pfadattributtyp entspricht, nur für einen Satz von Operationen durchgeführt wird.

## Revendications

1. Procédé pour une analyse de chemin de communication, le procédé comprenant :
la récupération d'une première règle de chemin de communication et d'une deuxième règle de chemin de communication pour un dispositif de contrôle d'accès (110), chaque règle comprenant au moins un type d'attribut de chemin spécifiant au moins un attribut et au moins un type d'opération de chemin spécifiant au moins une opération ;
l'insertion de la première règle dans une base de données (164 ; 326) utilisable pour stocker et rechercher des règles de chemin de communication ; et
la détermination, pour au moins un type d'attribut de chemin, de savoir si un attribut de la deuxième règle correspond à un attribut de la première règle,
**caractérisé par**
lorsque l'attribut de la deuxième règle ne correspond pas à un attribut de la première règle, l'insertion de la deuxième règle dans la base de données (164 ; 326) avec des redondances d'attributs de chemin de communication entre la première et la deuxième règle éliminées pour au moins un type d'attribut, insérant ainsi l'attribut de la deuxième règle qui ne correspond pas dans la base de données, en même temps que l'au moins une opération de la deuxième règle.

2. Procédé selon la revendication 1, dans lequel la récupération d'une règle de chemin de communication comprend l'analyse syntaxique de la règle à partir d'un fichier de configuration de pare-feu.

3. Procédé selon la revendication 1, dans lequel l'au moins un type d'attribut de chemin comprend un ou plusieurs d'une adresse de destination, d'une adresse de source, d'un type de service, et d'un temps de communication.

4. Procédé selon la revendication 1, dans lequel l'insertion de la première règle dans une base de données (164 ; 326) comprend le placement de l'au moins un attribut et de l'au moins une opération dans une base de données relationnelle ayant des tables (500a, 500b) séparées pour le type d'attribut de chemin et le type d'opération de chemin.

5. Procédé selon la revendication 1, comprenant en outre :
la détermination de savoir si une requête dans la base de données a été reçue ; et
si une requête a été reçue, la recherche dans la base de données (164 ; 326) pour déterminer si de quelconques règles de chemin de communication satisfont à la requête.

6. Procédé selon la revendication 5, dans lequel les critères de requête comprennent un ou plusieurs d'une adresse de destination, d'une adresse de source, d'un type de service, et d'un temps de communication.

7. Procédé selon la revendication 1, dans lequel :
la détermination de savoir si un attribut de la deuxième règle correspond à un attribut de la première règle pour au moins un type d'attribut de chemin comprend l'exécution d'une opération de différences d'ensembles entre attributs de la deuxième règle et attributs de la première règle pour l'au moins un type d'attribut de chemin ; et
l'insertion de l'attribut de la deuxième règle qui ne correspond pas à un attribut de la première règle dans la base de données (164 ; 326) comprend l'insertion des résultats de l'opération de différences d'ensembles dans la base de données.

8. Procédé selon la revendication 1, dans lequel l'insertion de l'attribut de la deuxième règle qui ne correspond pas à un attribut de la première règle dans la base de données (164 ; 326) comprend la tentative de regrouper au moins un type d'attributs non correspondants de la deuxième règle en plages.

9. Procédé selon la revendication 1, comprenant en outre :
la récupération d'une première règle de chemin de communication pour un deuxième dispositif de contrôle d'accès (110) ; et
l'insertion de la première règle de chemin de communication pour le deuxième dispositif de contrôle d'accès (110) dans la base de données.

10. Procédé selon la revendication 9, comprenant en outre :
la détermination de savoir si une requête dans la base de données a été reçue ; et
si une requête a été reçue, la recherche dans la base de données pour déterminer si de quelconques règles de chemin de communication satisfont à la requête.

11. Procédé selon la revendication 1, dans lequel la détermination de savoir si un attribut de la deuxième règle correspond à un attribut de la première règle pour au moins un type d'attribut de chemin n'est exécutée que pour un ensemble d'opérations.

12. Système pour une analyse de chemin de communication, comprenant :
un analyseur de règles de communication comprenant :
une base de données (164 ; 326) utilisable pour stocker et rechercher des règles de chemin de communication (322), chaque règle comprenant au moins un type d'attribut de chemin spécifiant au moins un attribut et au moins un type d'opération de chemin spécifiant au moins une opération ; et
un outil d'extraction (324) utilisable pour :
récupérer une première règle de chemin de communication et une deuxième règle de chemin de communication pour un dispositif de contrôle d'accès (110),
insérer la première règle dans la base de données (164 ; 326), et
déterminer, pour au moins un type d'attribut de chemin, si un attribut de la deuxième règle correspond à un attribut de la première règle, **caractérisé en ce que** le système est utilisable pour, lorsque l'attribut de la deuxième règle ne correspond pas à un attribut de la première règle, insérer la deuxième règle dans la base de données (164 ; 326) avec des redondances d'attributs de chemin de communication entre la première et la deuxième règle éliminées pour au moins un type d'attribut, insérant ainsi l'attribut de la deuxième règle dans la base de données (164 ; 326), en même temps que l'au moins une opération de la deuxième règle.

13. Système selon la revendication 12, dans lequel la base de données (164 ; 326) comprend une base de données relationnelle ayant des tables (500a, 500b) séparées pour le type d'attribut de chemin et le type d'opération de chemin.

14. Système selon la revendication 12, dans lequel la base de données (164 ; 326) est en outre utilisable pour :
déterminer si une requête dans la base de données a été reçue ; et
si une requête a été reçue, rechercher dans la base de données (164 ; 326) pour déterminer si de quelconques règles de chemin de communication satisfont à la requête.

15. Système selon la revendication 12, dans lequel l'outil d'extraction (324) est utilisable pour :
exécuter une opération de différences d'ensembles entre attributs de la deuxième règle et attributs de la première règle pour l'au moins un type d'attribut de chemin pour déterminer si un attribut de la deuxième règle correspond à un attribut de la première règle pour au moins un type d'attribut de chemin ; et
insérer les résultats de l'opération de différences d'ensembles dans la base de données (164 ; 326) pour insérer l'attribut de la deuxième règle qui ne correspond pas à un attribut de la première règle dans la base de données (164 ; 326).

16. Système selon la revendication 12, dans lequel l'outil d'extraction (324) est utilisable pour tenter de regrouper au moins un type d'attributs non correspondants de la deuxième règle en plages pour insérer l'attribut de la deuxième règle qui ne correspond pas à un attribut de la première règle dans la base de données (164 ; 326).

17. Système selon la revendication 12, dans lequel l'outil d'extraction (324) est en outre utilisable pour :
récupérer une première règle de chemin de communication pour un deuxième dispositif de contrôle d'accès (110) ; et
insérer la première règle de chemin de communication pour le deuxième dispositif de contrôle d'accès (110) dans la base de données.

18. Système selon la revendication 17, dans lequel la base de données (164 ; 326) est en outre utilisable pour :
déterminer si une requête dans la base de données a été reçue ; et
si une requête a été reçue, rechercher dans la base de données (164 ; 326) pour déterminer si de quelconques règles de chemin de communication satisfont à la requête.

19. Système selon la revendication 12, dans lequel l'outil d'extraction (324) est utilisable pour ne déterminer si un attribut de la deuxième règle correspond à un attribut de la première règle pour au moins un type d'attribut de chemin que pour un ensemble d'opérations.

20. Système selon la revendication 17, dans lequel la base de données est utilisable pour recevoir des requêtes pour des règles de chemin de communication,
dans lequel chaque règle comprend au moins deux types d'attributs de chemin spécifiant au moins un attribut,
dans lequel la base de données comprend des tables (500a, 500b) séparées pour les types d'attributs de chemin et le type d'opération de chemin, et
dans lequel l'outil d'extraction (324) est utilisable pour :
exécuter une opération de différences d'ensembles entre types d'attributs de chemin de la deuxième règle et de la première règle, et
insérer le résultat de l'opération de différences dans la base de données (164 ; 326), en même temps que l'au moins une opération de la deuxième règle.

21. Article comprenant un support lisible par une machine stockant des instructions utilisables pour faire en sorte qu'une ou plusieurs machines exécutent des opérations comprenant :
la récupération d'une première règle de chemin de communication et d'une deuxième règle de chemin de communication pour un dispositif de contrôle d'accès (110), chaque règle comprenant au moins un type d'attribut de chemin spécifiant au moins un attribut et au moins un type d'opération de chemin spécifiant au moins une opération ;
l'insertion de la première règle dans une base de données (164 ; 326) utilisable pour stocker et rechercher des règles de chemin de communication ; et
la détermination, pour au moins un type d'attribut de chemin, de savoir si un attribut de la deuxième règle correspond à un attribut de la première règle, **caractérisé en ce que** l'opération comprend, lorsque l'attribut de la deuxième règle ne correspond pas à un attribut de la première règle, l'insertion de la deuxième règle dans la base de données (164 ; 326) avec des redondances d'attributs de chemin de communication entre la première et la deuxième règle éliminées pour au moins un type d'attribut, insérant ainsi l'attribut de la deuxième règle qui ne correspond pas dans la base de données, en même temps que l'au moins une opération de la deuxième règle.

22. Article selon la revendication 21, dans lequel l'insertion de la première règle dans une base de données (164 ; 326) comprend le placement de l'au moins un attribut et de l'au moins une opération dans une base de données relationnelle ayant des tables séparées pour le type d'attribut de chemin et le type d'opération de chemin.

23. Article selon la revendication 21, dans lequel les instructions sont en outre utilisables pour faire en sorte qu'une ou plusieurs machines exécutent des opérations comprenant :
la détermination de savoir si une requête dans la base de données a été reçue ; et
si une requête a été reçue, la recherche dans la base de données (164 ; 326) pour déterminer si de quelconques règles de chemin de communication satisfont à la requête.

24. Article selon la revendication 23, dans lequel les critères de requête comprennent une adresse de destination, une adresse de source, un type de service, et un temps de communication.

25. Article selon la revendication 21, dans lequel :
la détermination de savoir si un attribut de la deuxième règle correspond à un attribut de la première règle pour au moins un type d'attribut de chemin comprend l'exécution d'une opération de différences d'ensembles entre attributs de la deuxième règle et attributs de la première règle pour l'au moins un type d'attribut de chemin ; et
l'insertion de l'attribut de la deuxième règle qui ne correspond pas à un attribut de la première règle dans la base de données (164 ; 326) comprend l'insertion des résultats de l'opération de différences dans la base de données (164 ; 326).

26. Article selon la revendication 21, dans lequel l'insertion de l'attribut de la deuxième règle qui ne correspond pas à un attribut de la première règle dans la base de données (164 ; 326) comprend la tentative de regrouper au moins un type d'attributs non correspondants de la deuxième règle en plages.

27. Article selon la revendication 21, dans lequel les instructions sont en outre utilisables pour faire en sorte qu'une ou plusieurs machines exécutent des opérations comprenant :
la récupération d'une première règle de chemin de communication pour un deuxième dispositif de contrôle d'accès ; et
l'insertion de la première règle de chemin de communication pour le deuxième dispositif de contrôle d'accès dans la base de données (164 ; 326).

28. Article selon la revendication 27, dans lequel les instructions sont en outre utilisables pour faire en sorte qu'une ou plusieurs machines exécutent des opérations comprenant :
la détermination de savoir si une requête dans la base de données a été reçue ; et
si une requête a été reçue, la recherche dans la base de données (164 ; 326) pour déterminer si de quelconques règles de chemin de communication satisfont à la requête.

29. Article selon la revendication 21, dans lequel la détermination de savoir si un attribut de la deuxième règle correspond à un attribut de la première règle pour au moins un type d'attribut de chemin n'est exécutée que pour un ensemble d'opérations.
